# EUROPEAN PATENT APPLICATION

(11) **EP 3 432 587 A1**
(43) Date of publication of application: **23.01.2019**
(21) Application number: 16895990.6
(22) Date of filing: 31.03.2016
(51) Int. Cl.: H04N 21/431, G09G 3/36

(54) **METHOD FOR PROCESSING APPLICATION PROGRAM AND MOBILE DEVICE**

(71) Applicant: Huawei Technologies Co., Ltd., Longgang District Shenzhen, Guangdong 518129 (CN)
(72) Inventor: ZHONG, Guanghua, Shenzhen Guangdong 518129 (CN); GUO, Yuhua, Shenzhen Guangdong 518129 (CN); QIU, Jianbin, Shenzhen Guangdong 518129 (CN); ZHAO, Jing, Shenzhen Guangdong 518129 (CN)
(74) Representative: Gill Jennings & Every LLP
(86) International application number: PCT/CN2016/078150
(87) International publication number: WO 2017/166210

(57) **Abstract**

Embodiments of the present invention provide an application program processing method and a terminal device. The application program processing method includes: determining resolution of each of multiple layers of an application program, where resolution of a first layer in the multiple layers is lower than resolution of another layer in the multiple layers; creating the multiple layers according to the resolution of each of the multiple layers; performing rendering processing on the multiple layers; performing scaling processing on a second layer in the multiple layers obtained after the rendering processing, where resolution of the second layer is different from resolution of a preset area used to display the second layer on a display screen, and resolution of the second layer obtained after the scaling processing is the same as the resolution of the preset area; compositing another layer in the multiple layers obtained after the rendering processing with the second layer obtained after the scaling processing; and outputting an image obtained after the compositing to the display screen for display. In the embodiments of the present invention, different resolution can be used for different layers during background running, so as to facilitate reduction in power consumption.

## Description

### TECHNICAL FIELD

The present invention relates to the image processing field, and in particular, to an application program processing method and a terminal device.

### BACKGROUND

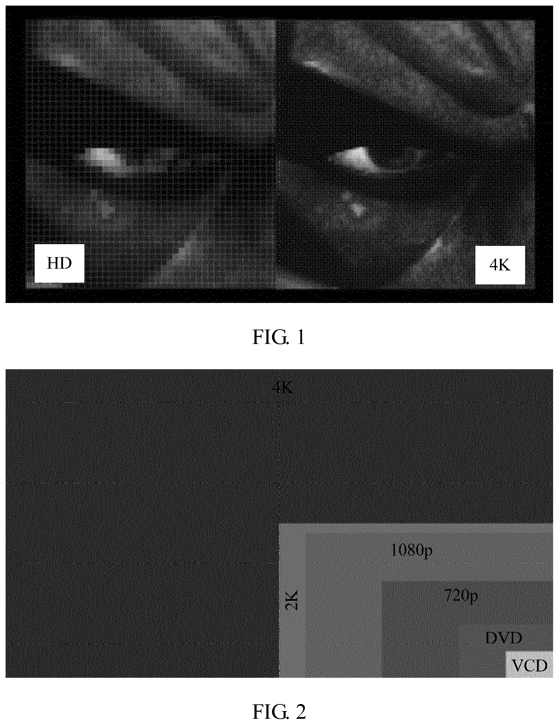

In the era of smartphones, a display effect of a display screen is increasingly becoming a focus for the smartphones. Spatial resolution can be effectively improved by improving display resolution. For an image, contrast and image fineness are greatly improved. High resolution can bring a better image display effect. As shown in FIG. 1, an image at 4K resolution is finer than an image at high resolution (High Definition, HD for short).

A data volume sharply increases with improvement of resolution. As shown in FIG. 2, FIG. 2 is a schematic relationship diagram of data volumes at different resolution. A single-frame data volume at 2K resolution calculated in a format of RGBA8888 is 2560×1440×4=14.0625 megabytes (Megabytes, MB for short), and a single-frame data volume at 1080P resolution calculated in the format of RGBA8888 is 1920×1080×4=7.91015625 MB. It can be learned that the data volume at the 2K resolution is exactly 56.25% greater than the data volume at the 1080P resolution, and consequently, sharply increased power consumption of a terminal is caused by processing the data.

### SUMMARY

Embodiments of the present invention provide an application program processing method and a terminal device, so as to facilitate reduction in power consumption.

A first aspect provides an application program processing method, including: determining resolution of each of multiple layers of an application program, where resolution of a first layer in the multiple layers is lower than resolution of another layer in the multiple layers; creating the multiple layers according to the resolution of each of the multiple layers; performing scaling processing on a second layer in the multiple layers obtained after rendering processing, where resolution of the second layer is different from resolution of a preset area used to display the second layer on a display screen, and resolution of the second layer obtained after the scaling processing is the same as the resolution of the preset area; compositing a layer other than the second layer in the multiple layers obtained after the rendering processing with the second layer obtained after the scaling processing; and outputting an image obtained after the compositing to the display screen for display.

In the embodiments of the present invention, the multiple layers are created according to the resolution of each of the multiple layers; and after the rendering processing is performed on the multiple layers, the multiple layers obtained after the rendering processing are composited at same resolution, and the image obtained after the compositing is output to the display screen for display. In this way, different resolution can be used for different layers during background running, so as to facilitate reduction in power consumption.

The first layer and the second layer are separately at least one of the multiple layers. The scaling processing is scaling down processing or scaling up processing.

Specifically, performing scaling processing on the second layer includes: performing scaling processing on each frame of image at the second layer.

Before a layer is displayed, the scaling processing is performed on the layer whose resolution is different from resolution of a preset area on the display screen. In this way, the resolution of the layer can match the resolution of the preset area used to display the layer on the display screen, so that neither a display effect is worsened, nor user viewing experience is affected.

With reference to the first aspect, in a first possible implementation of the first aspect, a scaling flag bit is set at the second layer, and the scaling flag bit is used to indicate that the resolution of the second layer is different from the resolution of the preset area.

Optionally, after the creating the multiple layers according to the resolution of each of the multiple layers, the method further includes: determining the second layer that is in the multiple layers and whose resolution is different from the resolution of the preset area used to display the second layer on the display screen; and setting the scaling flag bit at the second layer.

Optionally, the scaling flag bit is set in a blanking area of each frame of image at the second layer.

With reference to the first aspect or the first possible implementation of the first aspect, in a second possible implementation of the first aspect, the determining resolution of each of multiple layers of an application program includes: determining the resolution of each layer according to information about each layer.

Optionally, information about a layer includes content and/or a type of the layer.

With reference to the first aspect or the first possible implementation of the first aspect, in a third possible implementation of the first aspect, before the determining resolution corresponding to the application program, the processing method further includes: setting the resolution of the application program; and the determining resolution of each of multiple layers of an application program includes: determining the resolution corresponding to the application program; and determining the resolution of each of the multiple layers according to the resolution corresponding to the application program and the information about each of the multiple layers.

Optionally, the resolution of each of the multiple layers is lower than or equal to the resolution corresponding to the application program. This facilitates further reduction in power consumption.

With reference to the third possible implementation of the first aspect, in a fourth possible implementation of the first aspect, the setting the resolution of the application program includes: presenting a resolution setting interface in a preset area on the display screen, where the resolution setting interface includes an identifier of the application program and a resolution setting area corresponding to the application program; receiving setting input of a user, where the setting input is used to set the resolution of the application program in the resolution setting area corresponding to the application program; and setting the resolution of the application program according to the setting input.

The resolution setting interface is presented in the preset area on the display screen, and the resolution of the application program is set according to the input of the user, so that the resolution of the application program can be flexibly set, so as to facilitate reduction in power consumption of a terminal device. In addition, high resolution may be set for an application program that needs high resolution, and low resolution may be set for an application program that does not need high resolution. In this way, further, a display effect cannot be worsened.

A second aspect provides a terminal device. The terminal device is configured to implement the processing method in any one of the first aspect or the foregoing possible implementations of the first aspect.

Specifically, the terminal device includes: a first processing unit, configured to determine resolution of each of multiple layers of an application program, where resolution of a first layer in the multiple layers is lower than resolution of another layer in the multiple layers; a second processing unit, configured to create the multiple layers according to the resolution of each of the multiple layers, where the second processing unit is configured to perform rendering processing on the multiple layers; and a third processing unit, configured to perform scaling processing on a second layer in the multiple layers obtained after the rendering processing performed by the second processing unit, where resolution of the second layer is different from resolution of a preset area used to display the second layer on a display screen, and resolution of the second layer obtained after the scaling processing is the same as the resolution of the preset area, where the third processing unit is further configured to composite a layer other than the second layer in the multiple layers obtained after the rendering processing with the second layer obtained after the scaling processing; and the third processing unit is further configured to output an image obtained after the compositing to the display screen for display.

With reference to the second aspect, in a first possible implementation of the second aspect, a scaling flag bit is set at the second layer, and the scaling flag bit is used to indicate that the resolution of the second layer is different from the resolution of the preset area.

With reference to the second aspect or the first possible implementation of the second aspect, in a second possible implementation of the second aspect, the first processing unit is specifically configured to determine the resolution of each layer according to content of each layer.

With reference to the second aspect or the first possible implementation of the second aspect, in a third possible implementation of the second aspect, the first processing unit is further configured to set resolution of the application program before determining the resolution corresponding to the application program; and the first processing unit is specifically configured to: determine the resolution corresponding to the application program; and determine the resolution of each of the multiple layers according to the resolution corresponding to the application program and the content of each of the multiple layers.

With reference to the third possible implementation of the second aspect, in a fourth possible implementation of the second aspect, the first processing unit is specifically configured to: control the display screen to present a resolution setting interface in a preset area, where the resolution setting interface includes an identifier of the application program and a resolution setting area corresponding to the application program; receive setting input of a user, where the setting input is used to set the resolution of the application program in the resolution setting area corresponding to the application program; and set the resolution of the application program according to the setting input.

A third aspect provides a terminal device, including: a processor, a storage, a bus system, and a display screen, where the processor and the storage are connected by using the bus system, the storage is configured to store an instruction, and the processor is configured to execute the instruction stored in the storage, so that the terminal device executes the processing method in any one of the first aspect or the foregoing possible implementations of the first aspect.

A fourth aspect provides a computer readable storage medium. The computer readable storage medium stores one or more programs, where the one or more programs include an instruction, and when the instruction is executed by a terminal device, the terminal device executes the processing method in any one of the first aspect or the foregoing possible implementations of the first aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of display effects of images at two types of resolution;
FIG. 2 is a schematic relationship diagram of multiple types of resolution;
FIG. 3A and FIG. 3B are a schematic structural diagram of a terminal device according to an embodiment of the present invention;
FIG. 4 is a schematic diagram of an image resource that is of an application program and that is stored in a terminal device;
FIG. 5 is a schematic diagram of layer compositing;
FIG. 6 is a schematic flowchart of an application program processing method according to an embodiment of the present invention;
FIG. 7 is a schematic diagram of a desktop presented on a display screen of a terminal device;
FIG. 8 is a schematic diagram of a resolution setting interface according to an embodiment of the present invention;
FIG. 9 is a schematic diagram of an application interface presented on a display screen of a terminal device;
FIG. 10 is a schematic structural diagram of a terminal device according to an embodiment of the present invention; and
FIG. 11 is a schematic structural diagram of a terminal device according to another embodiment of the present invention.

### DESCRIPTION OF EMBODIMENTS

The following describes the technical solutions in the embodiments of the present invention with reference to the accompanying drawings in the embodiments of the present invention.

In the embodiments of the present invention, a terminal device may be but is not limited to a mobile station (MS, Mobile Station), a mobile terminal (Mobile Terminal), a mobile telephone (Mobile Telephone), a mobile phone (handset), a portable device (portable equipment), or the like. The terminal device such as a computer may communicate with one or more core networks by using a radio access network (RAN, Radio Access Network). Alternatively, the terminal device may be a portable, pocket-sized, handheld, computer built-in, or in-vehicle mobile apparatus.

In the embodiments of the present invention, the terminal device may process data of images at multiple types of resolution in a kernel (kernel) of an operating system. The operating system may be an operating system such as an iPhone operating system (iPhone Operating System, iOS for short), Android (Android), Windows Phone (Windows Phone), Symbian (Symbian), or a BlackBerry operating system (Black Berry Operating System).

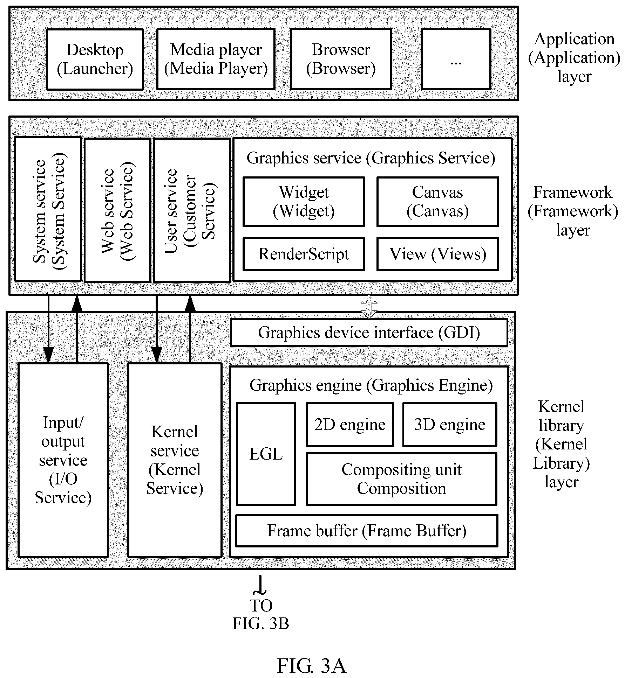

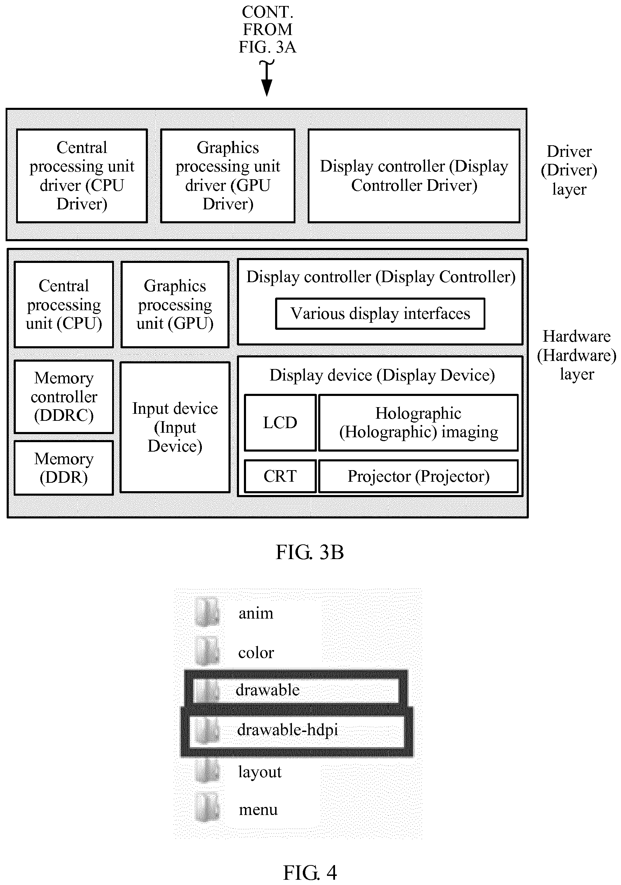

FIG. 3A and FIG. 3B are a schematic structural diagram of a terminal device according to an embodiment of the present invention.

As shown in FIG. 3A and FIG. 3B, a hardware layer of the terminal device may include a central processing unit (Center Processing Unit, CPU for short), and a graphics processing unit (Graphic Processing Unit, GPU). Certainly, the hardware layer of the terminal device may further include a storage, an input/output device, a memory, a memory controller, a network interface, and the like. The input device may include a keyboard, a mouse, a touchscreen, and the like, and the output device may include a display device such as a liquid crystal display (Liquid Crystal Display, LCD for short), a cathode-ray tube (Cathode Ray Tube, CRT for short), holographic (Holographic) imaging, a projector (Projector), and the like. An operating system (such as Android) and some application programs can run at the hardware layer. A kernel library is a core part of an operating system, and includes an input/output service, a kernel service, a graphics device interface, a graphics engine (Graphics Engine) that implements graphics processing for the CPU and the GPU, and the like. The graphics engine may include a 2D engine, a 3D engine, a compositing unit (Composition), a frame buffer (Frame Buffer), an embedded graphics library (Embedded Graphics Library, EGL for short), and the like. In addition, the terminal further includes a driver layer, a framework layer, and an application layer. The driver layer may include a CPU driver, a GPU driver, a display controller driver, and the like. The framework layer may include a graphics service (Graphic Service), a system service (System service), a web service (Web Service), a user service (Customer Service), and the like. The graphics service may include a widget (Widget), canvas (Canvas), a view (Views), RenderScript, and the like. The application layer may include a desktop (launcher), a media player (Media Player), a browser (Browser), and the like.

After an application program is installed in the terminal device, an image resource file for interface display is generated. An image resource may include various types of information used to generate a display interface of the application program. For example, the various types of information include information such as display content, a type, a size, or a drawing material of each layer on the display interface.

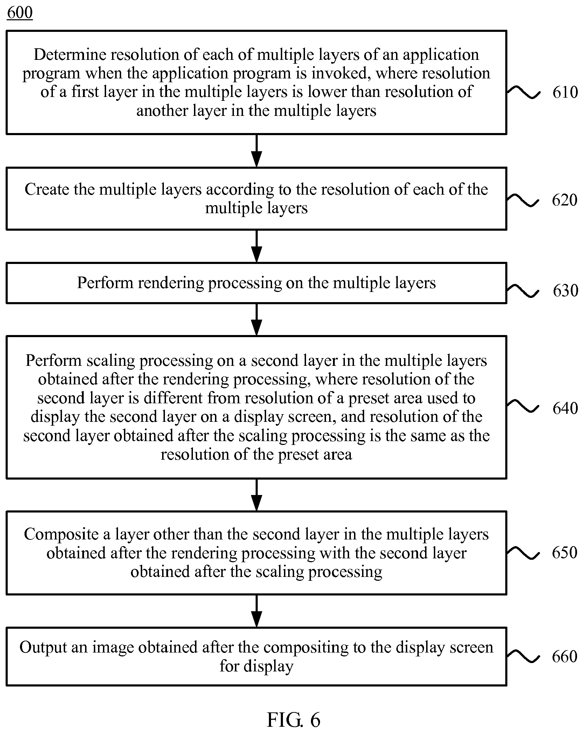

To be applicable to different resolution, one application program in the terminal device may include multiple image resource files corresponding to different resolution. As shown in FIG. 4, the application program includes image resource files at two types of resolution: low definition and high definition. The image resource files corresponding to the two types of resolution are respectively stored in a folder drawable and a folder drawable-HDPI that are shown in FIG. 6; Alternatively, when resolution of a display screen of the terminal device is determined, one application program in the terminal device may include only one image resource file, and resolution corresponding to the image resource file matches the resolution of the display screen.

In an existing solution, the CPU and/or the GPU in the terminal device may process an application program by executing the following procedure:

An image resource file that is corresponding to resolution of a display screen and that is of an application program that needs to be displayed is obtained according to the resolution of the display screen of the terminal device. For example, if the resolution of the display screen of the terminal device is HDPI, an image resource file in the folder drawable-HDPI shown in FIG. 6 is retrieved.

Drawing processing is performed according to information (such as a drawing material) in the image resource file, to generate multiple layers. Resolution of each layer is resolution corresponding to the image resource file.

SurfaceFlinger processing and HWC processing are performed on the generated multiple layers, to generate a frame of to-be-displayed image.

Device display processing is performed on the generated to-be-displayed image, and an image obtained after the device display processing is pushed to the display screen of a display device for display.

One application program may include multiple layers. It should be noted that, in the existing solution, drawing processing is directly performed according to an image resource of an application program, to generate multiple layers. The generated multiple layers have same resolution. When a display interface of the application needs to adapt to a screen size, the resolution of the multiple layers is further processed, so that the resolution of the multiple layers is the same as the resolution of the display screen.

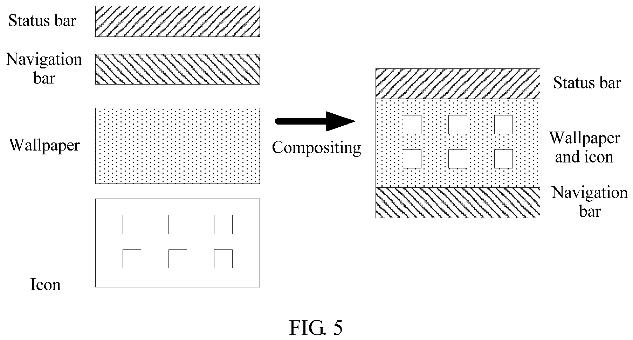

An application program displayed on the display screen is a display effect obtained after compositing multiple layers of the application program. When the application program is displayed on the display screen, the display screen usually further displays layers of other application programs, such as a status bar (such as SystemUI) and a navigation bar. Therefore, before the application program is output to the display screen for display, the application program further needs to be composited with the layers such as the status bar and the navigation bar, and an image obtained after the compositing is output to the display screen for display. In a scenario shown in FIG. 5, there are four layers: a status bar, a navigation bar, a wallpaper, and an icon. A display effect of an image obtained after compositing the four layers on the display screen is shown on the right side in FIG. 5.

In this embodiment of the present invention, the resolution of the display screen may be indicated by a sum of physical pixels that can be displayed on the display screen, such as 320×240 pixels or 640×480 pixels. Resolution of a layer may be indicated by a sum of pixels of each frame of image at the layer, such as 320×240 pixels or 640×480 pixels.

The terminal device usually has multiple applications, and different applications present different content to a user, such as text, an image, and an animation. Because a resolution requirement of an application mainly depends on a form of content, not all applications need relatively high resolution to better a display effect. Some applications are mainly used to present text content to the user, such as an ebook, a phonebook, a short message service message, a file browser, an input method, an email, and a browser. For this type of application, when resolution is high to some extent, a better display effect brought by the high resolution cannot be further identified with naked eyes. Some other applications are mainly used to present image content to the user, such as an image viewer, photographing, a game, and a desktop. For this type of application, a display effect is relatively greatly bettered with improvement of resolution. This can bring better experience to the user.

In an application program, different layers may present different content. For example, some layers display texts, some layers display images, and some layers display lines. Therefore, the different layers may also have different resolution requirements.

An application program processing method according to an embodiment of the present invention is as follows: Different resolution is set for different layers of an application program according to information about each layer of the application program, and an operating environment in which the application program runs at corresponding resolution is created in an operating system. When an application program is invoked, drawing can be performed for each layer of the application program at corresponding resolution.

FIG. 6 is a schematic flowchart of an application program processing method 600 according to an embodiment of the present invention. The processing method 600 may be executed by a terminal device.

As shown in FIG. 6, the processing method 600 includes the following content.

610. Determine resolution of each of multiple layers of an application program when the application program is invoked, where resolution of a first layer in the multiple layers is lower than resolution of another layer in the multiple layers.

The first layer is at least one of the multiple layers of the application program.

Specifically, the resolution of each layer may be determined according to information about each of the multiple layers.

An image resource of the application program records the information about each of the multiple layers of the application program, so that the information about each layer may be obtained from the image resource of the application program. However, this is not limited in this embodiment of the present invention. Alternatively, the information about each layer may be obtained in another manner. It should be understood that, in this embodiment of the present invention, information about a layer is information that can indicate a resolution requirement of the layer. The information about the layer may include multiple types of information about the layer. For example, the information about the layer includes content and/or a type of the layer. The content of the layer is content (such as an image or a text) presented at the layer, and different layers of a same type in an application program present different content. The type of the layer may include a text layer, a background layer, a fill layer, and the like.

For example, different content presented at layers may indicate different resolution requirements. In addition, content of a layer may be indirectly determined according to a type of the layer, and therefore, layers of different types may have different resolution requirements.

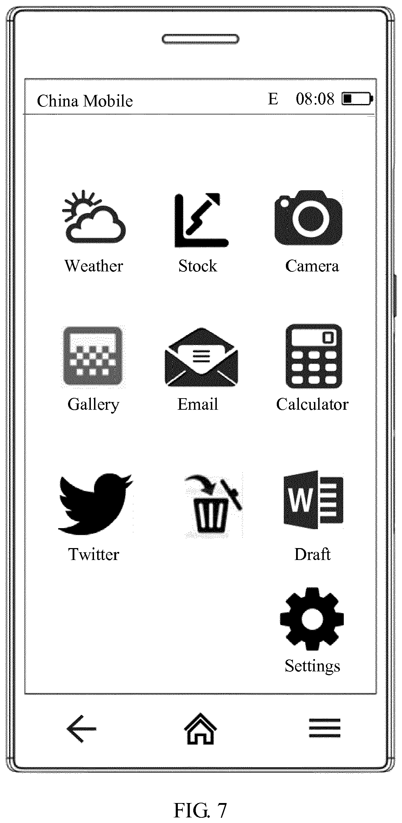

For example, in a desktop application, as shown in FIG. 7, a display effect of an icon layer on a desktop is relatively greatly bettered with improvement of resolution, but a change of a display effect of a text on the desktop may be incapable of further being identified with naked eyes. Therefore, in this embodiment of the present invention, corresponding running resolution is set for each layer according to the information about each layer of the application program. This can facilitate reduction in power consumption.

Optionally, resolution corresponding to the application program may be further determined before the resolution of each layer is determined. Correspondingly, the resolution of each layer is determined according to the resolution corresponding to the application program and the information about each layer.

The resolution corresponding to the application program is set according to a feature of the application program. For example, resolution corresponding to each application program may be preset; or resolution of each application program may be manually set by a user. For example, relatively high resolution may be set for an application program that needs high resolution, and relatively low resolution may be set for an application program that does not need high resolution.

After the resolution of the application program is set, when the application program starts running, a method for determining the resolution corresponding to the application program may be:
obtaining an identifier of the application program, and reading, according to the identifier of the application program, the resolution corresponding to the application program. For example, the identifier of the application program may be a process identifier (Process Identifier, PID for short), and the PID of the application program may be obtained by using IPCThreadState::self()->getCallingPid().

After the resolution corresponding to the application program is determined, the corresponding image resource can be determined according to the resolution corresponding to the application program. Then, the information about each of the multiple layers of the application program can be obtained according to the image resource of the application program.

After the resolution corresponding to the application program is determined, the resolution of each of the multiple layers can be determined according to the resolution corresponding to the application program and the information about each of the multiple layers.

Specifically, resolution of a layer may be determined by preconfiguring an algorithm or presetting a resolution mapping relationship in a system. The resolution of each layer is determined according to the resolution corresponding to the application program and the information about each layer of the application program. For example, if it is determined, according to information about a layer, that the layer needs relatively high resolution, it is determined that resolution of the layer is equal to the resolution corresponding to the application program; or if it is determined, according to information about a layer, that the layer needs relatively low resolution, it is determined that resolution of the layer is lower than the resolution corresponding to the application program.

The corresponding resolution is used for each layer, so that power consumption can be reduced, and system performance can be improved.

However, this is not limited in this embodiment of the present invention. Alternatively, according to a requirement of an actual application scenario, if a layer of the application program needs relatively high resolution, resolution of the layer may be higher than resolution of a display screen.

620. Create the multiple layers according to the resolution of each of the multiple layers.

630. Perform rendering processing on the multiple layers.

In this embodiment of the present invention, in an application program, resolution of at least some layers is lower than resolution of another layer. Therefore, in a rendering (Render) process of a CPU and a GPU, a data volume is greatly decreased, thereby facilitating reduction in power consumption.

640. Perform scaling processing on a second layer in the multiple layers obtained after the rendering processing, where resolution of the second layer is different from resolution of a preset area used to display the second layer on a display screen, and resolution of the second layer obtained after the scaling processing is the same as the resolution of the preset area.

Optionally, a scaling flag bit is set at the second layer, and the scaling flag bit is used to indicate that the resolution of the second layer is different from the resolution of the preset area used to display the second layer on the display screen.

650. Composite a layer other than the second layer in the multiple layers obtained after the rendering processing with the second layer obtained after the scaling processing.

660. Output an image obtained after the compositing to the display screen for display.

In this embodiment of the present invention, the multiple layers are created according to the resolution of each of the multiple layers, the rendering processing is performed on the multiple layers, and then the scaling processing is performed on some of the multiple layers, so that the multiple layers are composited at same resolution, and the image obtained after the compositing is output to the display screen for display. In this way, different resolution can be used for different layers during background running, so as to facilitate reduction in power consumption.

If resolution of a layer obtained after the compositing does not match the resolution of the display screen, user viewing experience is affected. For example, when the resolution of the layer is higher than the resolution of the display screen, it is possible that only a part of the layer is displayed on the display screen. That is, the layer image cannot be fully displayed, and consequently, the user cannot normally view the layer image. When the resolution of the layer is lower than the resolution of the display screen, the layer may be displayed only in some areas on the display screen, and consequently, a waste of the display screen and bad user experience are caused. Therefore, if the resolution of the layer of the application program is different from the resolution of the display screen, before the multiple layers of the application program are overlaid and an image obtained after the overlaying is output to the display screen for display, the scaling processing needs to be performed on a layer whose resolution is different from resolution of a preset area used to display the layer on the display screen, so that the resolution of the layer of the application program matches the resolution of the display screen.

It should be understood that the second layer may be one layer or multiple layers of the application program. When the resolution of each layer of the application program is different from resolution of a preset area used to display the layer on the display screen, the scaling processing needs to be performed on each layer.

If the second layer is one layer, and the resolution of the layer is lower than the resolution of the preset area, scaling up processing is performed on the second layer. If the second layer is one layer, and the resolution of the second layer is higher than the resolution of the preset area, scaling down processing is performed on the second layer.

If the second layer is multiple layers, and resolution of a first part of layers in the multiple layers is lower than resolution of preset areas on the display screen, and resolution of a second part of layers is higher than resolution of preset areas on the display screen, scaling up processing is performed on the first part of layers, and scaling down processing is performed on the second part of layers.

If only the resolution of the first layer in the multiple layers of the application program is different from resolution of a preset area on the display screen, the second layer is the first layer. If the resolution of the first layer in the multiple layers of the application program and resolution of some of layers other than the first layer in the multiple layers are different from resolution of preset areas on the display screen, the second layer includes the first layer and the some layers. If resolution of all the layers of the application program is different from resolution of preset areas on the display screen, the second layer is all the layers of the application program.

It should be understood that, that resolution of a layer is the same as resolution of a preset area used to display the layer on the display screen may also be indicated by that pixel density of the layer is the same as pixel density of the display screen. That resolution of a layer is different from resolution of a preset area used to display the layer on the display screen may also be indicated by that pixel density of the layer is different from pixel density of the display screen. The pixel density refers to a quantity of pixels per unit area. For example, the pixel density refers to a quantity of pixels per inch of a screen.

Optionally, the scaling flag bit is set at the second layer, and the scaling flag bit is used to indicate that the resolution of the second layer is different from the resolution of the preset area used to display the second layer on the display screen. That is, it may be determined, according to whether the scaling flag bit is set at a layer, whether the scaling processing needs to be performed on the layer.

It should be understood that the scaling flag bit may be a scaling down flag bit or a scaling up flag bit, and the scaling down flag bit and the scaling up flag bit are respectively corresponding to the scaling down processing and the scaling up processing.

The scaling processing is the scaling down processing or the scaling up processing. When resolution of a layer is higher than the resolution of the display screen, scaling down processing needs to be performed on the layer. When resolution of a layer is lower than the resolution of the display screen, scaling up processing needs to be performed on the layer.

For example, the scaling down processing may be implemented by using a down-sampling method and by using a down-sampling filter. The scaling up processing may be implemented by using an interpolation method and by using an interpolation filter. For a process of the scaling down/scaling up processing, refer to the prior art. Details are not described herein.

In addition, some anti-aliasing algorithms may be further used during the scaling up processing. In this way, an image of a magnified layer has relatively high resolution.

The scaling processing may be implemented by a decision support system (Decision Support System, DSS for short) of the terminal device, or may be implemented by a mobile display process (Mobile Display Process, MDP) module.

In this embodiment of the present invention, if resolution of a layer obtained after the rendering processing is different from the resolution of the display screen, the scaling processing is first performed on the layer of the application program, and the layer obtained after the scaling processing is output to the display screen for display. In this way, a display effect cannot be worsened.

Therefore, in this embodiment of the present invention, different resolution is used for different layers, so as to facilitate reduction in power consumption. In addition, the scaling processing is performed on a layer before the layer is displayed, so that neither a display effect is worsened, nor user viewing experience is affected.

Optionally, the multiple layers of the application program may further be composited with a layer of another application program in step 650, and an image obtained after the compositing is output to the display screen for display.

Optionally, before the resolution corresponding to the application program is determined, the processing method 600 may further include: setting resolution of at least one application program. The at least one application program includes the application program.

An algorithm may be preconfigured in the system, and resolution of each application program is set according to information that is about the application program and that is recorded in an image resource of the application program. For example, if an application program is mainly used to present text content to a user, for example, the application program is an ebook, an input method, or a file browser, resolution corresponding to the application program may be set to be lower than resolution of a preset area used to present the application program on the display screen. If an application program is mainly used to present image content to a user, for example, the application program is an image viewer, a game, or photographing, resolution of the application program may be set to be the same as resolution of a preset area used to present the application program on the display screen.

Alternatively, resolution corresponding to each application program may be set according to input of a user. Correspondingly, setting the resolution of the application program may include:
presenting a resolution setting interface in a preset area on the display screen, where the resolution setting interface includes an identifier of the application program and a resolution setting area corresponding to the application program;
receiving setting input of a user, where the setting input is used to set the resolution of the application program in the resolution setting area corresponding to the application program; and
setting the resolution of the application program according to the setting input.

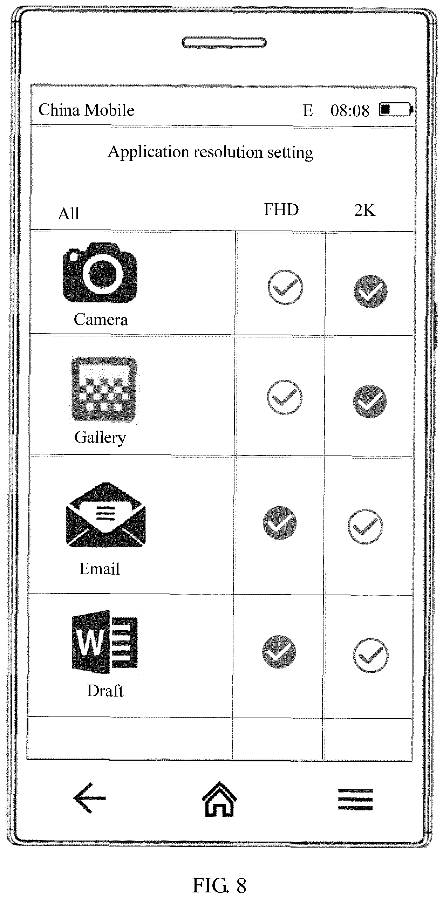

For example, each resolution setting area may include multiple types of resolution, and the user may select corresponding resolution for each application program from the multiple types of resolution. It should be noted that a presentation form of each resolution setting area is not limited in this embodiment of the present invention. For example, the multiples types of resolution in each resolution setting area may be presented in a form of a drop-down list, and the user may select resolution from the drop-down list; or may be presented in a form of a list. As shown in FIG. 8, the user may select corresponding resolution.

Optionally, after the multiple layers of the application program are created, the processing method 600 may further include: determining, according to the resolution of each of the multiple layers, the second layer that is in the multiple layers and whose resolution is different from the resolution of the preset area on the display screen; and setting the scaling flag bit at the second layer. In this way, after the rendering processing is performed on the layers, the scaling processing may be performed only on the layer at which the scaling flag bit is set.

Specifically, the scaling flag bit may be set on each frame of image at the second layer. For example, the scaling flag bit may be placed in a blanking area of the image. However, this is not limited in this embodiment of the present invention. Alternatively, the scaling flag bit may be placed in another area of the image.

If resolution of a layer is equal to resolution of a preset area used to display the layer on the display screen, the scaling flag bit does not need to be set at the layer.

For example, it may be determined, according to a size (such as a width) of a layer, whether to set the scaling flag bit in an application program.

For example, an application program in an operating system generally works in full screen, and therefore, widths of most layers are equal to widths of preset areas used to display the layers on the display screen of the terminal device. Therefore, it is determined, according to the widths of images, whether to set the scaling flag bit at the layers. If the widths are not equal to the widths of the preset areas on the display screen, the scaling flag bit is set. If the widths are equal to the widths of the display areas on the display screen, the scaling flag bit is not set.

In addition, resolution corresponding to an application program may be determined according to a PID of the application program to which a layer belongs, resolution of the layer is determined according to the resolution corresponding to the application program and information about the layer, and then it is determined whether to set the scaling flag bit at the layer. If the resolution of the layer is lower than the resolution of the display screen, the scaling up flag bit is set at the layer. If the resolution of the layer is higher than the resolution of the display screen, the scaling down flag bit is set at the layer.

For example, for an application program whose pop-up dialog box is not a full-screen window, it may be determined, according to a PID of the application program, whether a layer of the application program works at low resolution, so as to determine whether to set the scaling flag bit.

It should be understood that, alternatively, for an application program whose pop-up dialog box is not a full-screen window, pixel density of a layer may be determined according to a size of the layer and resolution of the layer of the application program, and then it is determined, according to the pixel density of the layer, whether the layer works at low resolution, so as to determine whether to set the scaling flag bit.

The following uses a specific scenario as an example to describe this embodiment of the present invention.

A user is using a mobile phone shown in FIG. 3A and FIG. 3B, and the mobile phone is in a normal state. A touchscreen receives an operation of opening an application resolution setting interface from the user, and a display screen displays the application resolution setting interface. As shown in FIG. 8, the touchscreen receives multiple selection operations from the user, and according to the multiple selection operations, a processor separately sets resolution of a camera application and resolution of a gallery application to 2K, and sets resolution of an email application and resolution of a document application to full high definition (Full High Definition, FHD for short). Then, the touchscreen receives an instruction of returning to a home screen from the user, and the processor controls, according to the instruction of the user, a display device to display the home screen, and no longer display the application resolution setting interface.

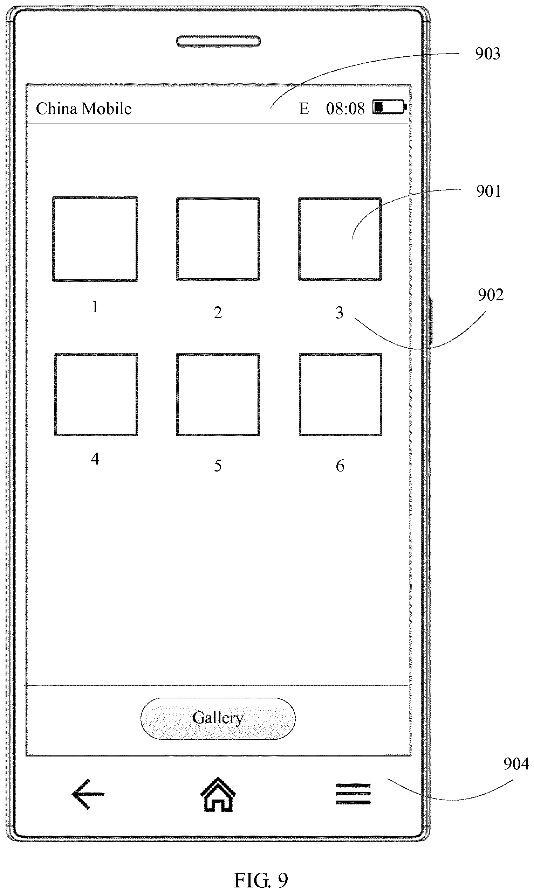

Afterwards, the touchscreen receives an instruction of opening the gallery from the user, and the processor starts the gallery according to the instruction of the user, and controls the display device to display a home screen that is of the gallery and that is shown in FIG. 9. A method for starting the gallery by the processor is as follows: It is determined that the resolution of the gallery is 2K, and an image resource of 2K is obtained. Resolution of each layer is determined according to information that is about each layer of the gallery and that is recorded in the image resource and the resolution 2K of the gallery. For example, resolution of an image layer to which a thumbnail image 901 of the gallery belongs is set to 2K, and resolution of a text layer to which text 902 belongs is set to the FHD. A scaling flag bit is set at a layer whose resolution is different from resolution of a preset area on the display screen. For example, if resolution of a preset area on the screen of the mobile phone is 2K, the scaling flag bit is set at the text layer. Multiple layers of the gallery are separately created according to the resolution of each layer, and rendering processing is performed on the multiple layers of the gallery application. Before the application program is output to the display device for display, scaling processing is performed on the layer at which the scaling flag bit is set, and resolution of the layer obtained after the scaling processing is the same as the resolution of the preset area used to display the layer on the display screen. For example, scaling up processing is performed on the text layer of the gallery application, so that the resolution of the text layer changes to 2K. The multiple layers of the gallery application are composited with other layers such as a status bar 903 and a navigation bar 904, and an image obtained after the compositing is output to the display device for display.

Then, the touchscreen receives an instruction of returning to the home screen from the user, and the processor controls the display screen to display the home screen, and no longer display the previously opened screen of the gallery application. Because the user does not close the application, the processor still runs the gallery application in the background. In this case, the processor still runs at respective resolution of each layer, so that power consumption of the terminal device can be reduced.

In this embodiment of the present invention, resolution of a layer is flexibly set according to information about the layer. High resolution is set for a layer that needs high resolution, and low resolution is set for a layer that does not need high resolution. In addition, the scaling processing is performed on a layer of an application before the layer is output to the display screen for display. Therefore, a display effect cannot be worsened, and power consumption can be reduced.

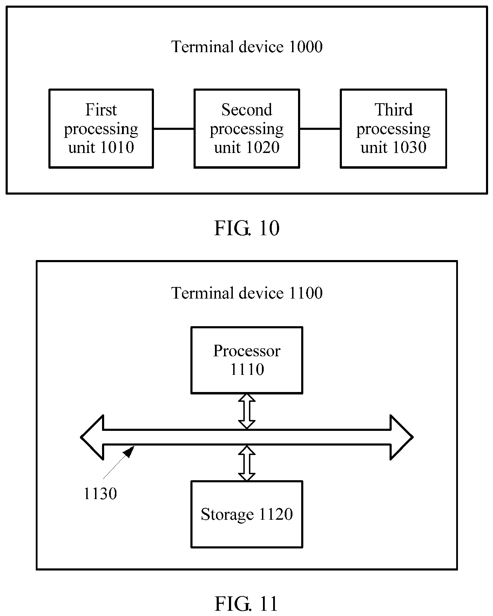

FIG. 10 is a schematic diagram of a terminal device 1000 according to another embodiment of the present invention. As shown in FIG. 10, the terminal device 1000 includes a first processing unit 1010, a second processing unit 1020, and a third processing unit 1030.

The first processing unit 1010 is configured to determine resolution of each of multiple layers of an application program, where resolution of a first layer in the multiple layers is lower than resolution of another layer in the multiple layers.

The second processing unit 1020 is configured to: create the multiple layers according to the resolution that is of each of the multiple layers and that is determined by the first processing unit 1010; and perform rendering processing on the multiple layers.

The third processing unit 1030 is configured to perform scaling processing on a second layer in the multiple layers obtained after the rendering processing performed by the second processing unit 1020, where resolution of the second layer is different from resolution of a preset area used to display the second layer on a display screen, and resolution of the second layer obtained after the scaling processing is the same as the resolution of the preset area. The third processing unit is further configured to: composite a layer other than the second layer in the multiple layers obtained after the rendering processing with the second layer obtained after the scaling processing, and output an image obtained after the compositing to the display screen for display.

In this embodiment of the present invention, the multiple layers are created according to the resolution of each layer, the rendering processing is performed on the multiple layers, and then the scaling processing is performed on some of the multiple layers, so that the multiple layers are composited at same resolution, and the image obtained after the compositing is output to the display screen for display. In this way, different resolution can be used for different layers during background running, so as to facilitate reduction in power consumption.

Optionally, a scaling flag bit is set at the second layer, and the scaling flag bit is used to indicate that the resolution of the second layer is different from the resolution of the preset area used to display the second layer on the display screen.

Optionally, the first processing unit 1010 is specifically configured to determine the resolution of each layer according to information about each layer.

Optionally, the first processing unit 1010 is specifically configured to: determine resolution corresponding to the application program, and determine the resolution of each of the multiple layers according to the resolution corresponding to the application program and the information about each of the multiple layers.

Optionally, the first processing unit 1010 is further configured to: set resolution of at least one application program before determining the resolution corresponding to the application program, where the at least one application program includes the application program.

Optionally, the first processing unit 1010 is specifically configured to:
control the display screen to present a resolution setting interface in a preset area, where the resolution setting interface includes an icon of the application program and a resolution setting area corresponding to the application program;
receive setting input of a user, where the setting input is used to set the resolution of the application program in the resolution setting area corresponding to the application program; and
set the resolution of the application program according to the setting input.

It should be noted that, in this embodiment of the present invention, the first processing unit 1010, the second processing unit 1020, and the third processing unit 1030 may be implemented by a processor. As shown in FIG. 11, another terminal device 1100 according to an embodiment of the present invention may include a processor 1110, a storage 1120, and a bus system 1130. The storage 1120 may be configured to store code or the like to be executed by the processor 1110. It should be noted that the processor 1110 may be corresponding to the CPU and/or the GPU of the terminal device shown in FIG. 3A and FIG. 3B.

Optionally, the terminal device 1100 may further include a user interface that includes a display (such as a touchscreen, an LCD, a CRT, holographic (Holographic) imaging, or a projector (Projector)), a keyboard, or a click device (such as a mouse, a trackball (trackball), a touchpad, or a touchscreen).

The components of the terminal device 1100 are coupled together by using the bus system 1130. In addition to a data bus, the bus system 1130 may further include a power bus, a control bus, and a status signal bus.

The storage 1120 may include a read-only memory and a random access memory, and provides an instruction and data for the processor 1110. A part of the storage 1120 may further include a nonvolatile random access memory (NVRAM).

In some implementations, the storage 1120 stores the following element: an executable module or a data structure, or a subset of an executable module and a data structure, or an extended set of an executable module and a data structure.

An operating system includes various system programs such as the framework layer, the kernel library layer, and the driver layer that are shown in FIG. 3A and FIG. 3B; and is configured to implement various basic services and process hardware-based tasks.

An application program module includes various application programs such as the desktop (launcher), the media player (Media Player), and the browser (Browser) that are shown in FIG. 3A and FIG. 3B; and is configured to implement various application services.

The terminal device 1000 shown in FIG. 10 or the terminal device 1100 shown in FIG. 11 can implement the processes implemented in the foregoing method embodiment. To avoid repetition, details are not described herein again.

It should be noted that the foregoing method embodiment of the present invention may be applied to a processor, or implemented by a processor. The processor may be an integrated circuit chip and has a signal processing capability. In an implementation process, the steps in the foregoing method embodiment may be completed by using an integrated logic circuit of hardware in the processor or an instruction in a form of software. The processor may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor can implement or execute the methods, steps, and logical block diagrams that are disclosed in the embodiments of the present invention. The general purpose processor may be a microprocessor, or the processor may be any normal processor, or the like. The steps of the methods disclosed with reference to the embodiments of the present invention may be directly executed and completed by using a hardware decoding processor, or may be executed and completed by using a combination of a hardware module and a software module in a decoding processor. The software module may be located in a mature storage medium in the art, such as a random access memory, a flash memory, a read-only memory, a programmable read-only memory, an electrically erasable programmable memory, or a register. The storage medium is located in the storage, and the processor reads information from the storage and completes the steps in the foregoing methods in combination with the hardware in the processor.

It should be understood that, the term "and/or" in this embodiment of the present invention describes only an association relationship for describing associated objects and indicates that three relationships may exist. For example, A and/or B may indicate the following three cases: Only A exists, both A and B exist, and only B exists.

A person of ordinary skill in the art may be aware that, in combination with the examples described in the embodiments disclosed in this specification, units and algorithm steps may be implemented by electronic hardware, computer software, or a combination thereof. To clearly describe interchangeability between the hardware and the software, the foregoing description has generally described compositions and steps in each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to the corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on multiple network units. Some or all of the units may be selected according to actual requirements, to achieve the objectives of the solutions in the embodiments of the present invention.

In addition, the function units in the embodiments of the present invention may be integrated into one processing unit, or each of the units may exist alone physically, or two or more units are integrated into one unit. The foregoing integrated unit may be implemented in a form of hardware, or may be implemented in a form of a software function unit.

With descriptions of the foregoing implementations, a person skilled in the art may clearly understand that the present invention may be implemented by hardware, firmware, or a combination thereof. When the present invention is implemented by software, the foregoing functions may be stored in a computer-readable medium or transmitted as one or more instructions or code in a computer-readable medium. The computer-readable medium includes a computer storage medium and a communications medium. The communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM or another optical disc storage, a disk storage medium or another magnetic storage device, or any other medium that can carry or store expected program code in a form of an instruction or a data structure and that can be accessed by a computer. In addition, any connection may be appropriately defined as a computer-readable medium. For example, if software is transmitted from a website, a server, or another remote source by using a coaxial cable, an optical fiber/cable, a twisted pair, a digital subscriber line (English: Digital Subscriber Line, DSL for short), or a wireless technology such as infrared ray, radio, or microwave, the coaxial cable, the optical fiber/cable, the twisted pair, the DSL, or the wireless technology such as infrared ray, radio, or microwave are included in fixation of a medium to which they belong. For example, a disk (Disk) and a disc (disc) used in the present invention include a compact disc (CD), a laser disc, an optical disc, a digital versatile disc (DVD), a floppy disk, and a Blu-ray disc. The disk generally copies data by a magnetic means, and the disc copies data optically by a laser means. The foregoing combination should also be included in the protection scope of the computer-readable medium.

In summary, what is described above is merely example embodiments of the technical solutions in the present invention, but is not intended to limit the protection scope of the present invention. Any modification, equivalent replacement, or improvement made without departing from the spirit and principle of the present invention shall fall within the protection scope of the present invention.

## Claims

1. An application program processing method, comprising:
determining resolution of each of multiple layers of an application program, wherein resolution of a first layer in the multiple layers is lower than resolution of another layer in the multiple layers;
creating the multiple layers according to the resolution of each of the multiple layers;
performing rendering processing on the multiple layers;
performing scaling processing on a second layer in the multiple layers obtained after the rendering processing, wherein resolution of the second layer is different from resolution of a preset area used to display the second layer on a display screen, and resolution of the second layer obtained after the scaling processing is the same as the resolution of the preset area;
compositing a layer other than the second layer in the multiple layers obtained after the rendering processing with the second layer obtained after the scaling processing; and
outputting an image obtained after the compositing to the display screen for display.

2. The processing method according to claim 1, wherein a scaling flag bit is set at the second layer, and the scaling flag bit is used to indicate that the resolution of the second layer is different from the resolution of the preset area.

3. The processing method according to claim 1 or 2, wherein the determining resolution of each of multiple layers of an application program comprises:
determining the resolution of each layer according to information about each layer.

4. The processing method according to any one of claims 1 to 3, wherein before the determining resolution corresponding to the application program, the processing method further comprises:
setting the resolution of the application program; and
the determining resolution of each of multiple layers of an application program comprises:
determining the resolution of the application program; and
determining the resolution of each of the multiple layers according to the resolution of the application program and the information about each of the multiple layers.

5. The processing method according to claim 4, wherein the setting the resolution of the application program comprises:
presenting a resolution setting interface in a preset area on the display screen, wherein the resolution setting interface comprises an identifier of the application program and a resolution setting area corresponding to the application program;
receiving setting input of a user, wherein the setting input is used to set the resolution of the application program in the resolution setting area corresponding to the application program; and
setting the resolution of the application program according to the setting input.

6. A terminal device, comprising:
a first processing unit, configured to determine resolution of each of multiple layers of an application program, wherein resolution of a first layer in the multiple layers is lower than resolution of another layer in the multiple layers;
a second processing unit, configured to create the multiple layers according to the resolution that is of each of the multiple layers and that is determined by the first processing unit, wherein
the second processing unit is further configured to perform rendering processing on the multiple layers; and
a third processing unit, configured to perform scaling processing on a second layer in the multiple layers obtained after the rendering processing performed by the second processing unit, wherein resolution of the second layer is different from resolution of a preset area used to display the second layer on a display screen, and resolution of the second layer obtained after the scaling processing is the same as the resolution of the preset area, wherein
the third processing unit is further configured to composite a layer other than the second layer in the multiple layers obtained after the rendering processing with the second layer obtained after the scaling processing; and
the third processing unit is further configured to output an image obtained after the compositing to the display screen for display.

7. The terminal device according to claim 6, wherein a scaling flag bit is set at the second layer, and the scaling flag bit is used to indicate that the resolution of the second layer is different from the resolution of the preset area.

8. The terminal device according to claim 6 or 7, wherein the first processing unit is specifically configured to determine the resolution of each layer according to information about each layer.

9. The terminal device according to claim 6 or 7, wherein the first processing unit is further configured to set resolution of the application program before determining the resolution corresponding to the application program; and
the first processing unit is specifically configured to:
determine the resolution corresponding to the application program; and
determine the resolution of each of the multiple layers according to the resolution corresponding to the application program and the information about each of the multiple layers.

10. The terminal device according to claim 9, wherein the first processing unit is specifically configured to:
control the display screen to present a resolution setting interface in a preset area, wherein the resolution setting interface comprises an identifier of at least one application program and a resolution setting area corresponding to the application program;
receive setting input of a user, wherein the setting input is used to set the resolution of the application program in the resolution setting area corresponding to the application program; and
set the resolution of the application program according to the setting input.

11. A terminal device, comprising:
a processor, a storage, a bus system, and a display screen, wherein the processor, the storage, and the display screen are connected by using the bus system, the storage is configured to store an instruction, and the processor is configured to execute the instruction stored in the storage, so that the terminal device executes the processing method according to any one of claims 1 to 5.
